Europäisches Patentamt

**European Patent Office**

**Office européen des brevets**

(11) Veröffentlichungsnummer: **0 089 444**

**A1**

(12) **EUROPÄISCHE PATENTANMELDUNG**

(21) Anmeldenummer: **82710013.2**

(22) Anmeldetag: **19.03.82**

(51) Int. Cl.³: **B 29 C 17/04**

(43) Veröffentlichungstag der Anmeldung:
28.09.83 Patentblatt 83/39

(84) Benannte Vertragsstaaten:
AT BE DE FR GB IT LU NL

(71) Anmelder: **Reiss International GmbH**
**Postfach 180**
**D-7992 Tettnang 1(DE)**

(72) Erfinder: **Friedrich, Kurt**
**Obereisenbach 78**
**D-7992 Tettnang 1(DE)**

(74) Vertreter: **Graf, Georg H., Dipl.-Ing.**
**c/o Standard Elektrik Lorenz AG Patent- und**
**Lizenzwesen Postfach 300 929 Kurze Strasse 8**
**D-7000 Stuttgart 30(DE)**

(54) Verfahren und Vorrichtung zur Herstellung von Kunststoffteilen.

(57) Bei dem Herstellverfahren wird Platten- oder Bandmaterial (15) aus thermoplastischem Kunststoff in einer im wesentlichen aus zwei Formhälften (3, 4) bestehenden Streckform (1) durch Einblasen von Heißluft zu einem beispielsweise als Leuchtenwanne ausgebildeten Formteil (2) umgeformt und der allseitig überstehende, als Abfallstreifen (26) bezeichnete Randstreifen bereits beim Schließen der Streckform (1) durch an ihren Formhälften (3, 4) vorgesehene Schneidkanten (8, 20) abgetrennt.

Eine erste Formhälfte (3) weist hierfür eine an einer Grundplatte (5) befestigte Schnittleiste (7) auf. Diese ist den Umriß des Formteiles (2) nach außen begrenzend angeordnet, wobei ihre freie Innenkante als Schneidkante (8) ausgebildet ist. Die Schneidkante (20) der zweiten Formhälfte (4) besteht aus einer dem Umriß des Formteiles (2) entsprechenden Außenkante der Formwandung (19) des Formennestes (16), das mit Gleitsitz in den Innenraum der Schnittleiste (7) einführbar ist. Innerhalb der Schnittleiste (7) ist ein als Vorschleppstempel ausgebildeter Federboden (9) hervorstehend angeordnet. Zwischen dessen Rand und dem des Formennestes (16) wird das Kunststoffmaterial eingespannt. Beim tieferen Eintauchen der Anordnung zwischen die Schnittleiste (7) erfolgt das Abscheren des Randstreifens (26) vom Formteil (2).

Fig.1

K.Friedrich-1

## Verfahren und Vorrichtung zur Herstellung von Kunst- stoffteilen

Das vorliegende Herstellungsverfahren und die Vorrichtung zur Durchführung des Verfahrens beziehen sich auf die Verarbeitung von thermoplastischem Kunststoff, bei dem Platten- oder Bandmaterial durch mechanisches und pneumatisches Streckformen umgeformt wird.

Die Erfindung geht aus von einem im Oberbegriff des Anspruchs 1 genannten Stand der Technik. Bei diesem wird die vorgeheizte Platte oder ein vom Bandmaterial abgetrenntes Folienstück der geöffneten Streckform zugeführt und die Formhälften dann geschlossen. Während der Schließbewegung erfaßt ein ebener Rand der einen Formhälfte zuerst das all- seitig überstehende Material und fixiert es durch Andruck gegen eine entsprechende Fläche der anderen Formhälfte, be- vor das Umformen des eingespannten Materials beginnt. Nach dem Öffnen der Steckform wird das in seinen Konturen ge- formte Teil entnommen und der noch überstehende Randstreifen in einem separaten Fertigungsschritt abgesägt. Anschließend wird das fertiggestellte Formteil von den beim Sägen entstandenen Spänen gesäubert und verpackt.

K.Friedrich-1

Der Erfindung liegt die Aufgabe zugrunde, ein einfaches und kostengünstiges Verfahren zur Herstellung von Formteilen aus thermoplastischem Kunststoff anzugeben, der durch Streckformen umgeformt wird und hierfür eine geeignete Vorrichtung zur Durchführung des Herstellverfahrens zu nennen. Diese Aufgabe wird erfindungsgemäß durch die in den kennzeichnenden Teilen der Ansprüche 1 und 3 angegebenen Maßnahmen gelöst. Vorteilhafte Ausgestaltungen der Erfindung sind den Unteransprüchen zu entnehmen.

Hierdurch werden verschiedene Vorteile erzielt. Bei dem Verfahren zum Herstellen von beispielsweise als Leuchtenwanne ausgebildeten Formteilen entfallen zwei der zuvor notwendigen Verfahrensschritte. Erstens das erheblich zeitaufwendige und damit lohnintensive Absägen des Randstreifens. Und zweitens das Säubern des Formteiles von den anhaftenden Sägespänen. Durch den Fortfall der beiden genannten Fertigungsschritte ist nunmehr eine besonders wirtschaftliche Serienproduktion von Formteilen möglich.

Durch Anordnen einer Schnittleiste mit innen liegender Schneidkante an einer Formhälfte und einfacher Ausbildung einer äußeren Formwandungskante als komplementäre Schneidkante an der anderen Formhälfte wird eine Schneidevorrichtung geschaffen, die ohne Schwierigkeiten mit dem Blaswerkzeug kombinierbar ist. Da der innerhalb der Schnittleiste angeordnete Federboden zugleich auch als Vorschleppstempel ausgebildet ist, werden die zu bewegenden Vorrichtungsteile in vorteilhafter Weise auf ein Minimum begrenzt. Weil die aus dem Werkzeug fertig entnommenen Formteile im Gegensatz zu denen mit abgesägtem Randstreifen keine scharfen Kanten mehr aufweisen, wird die beim Hantieren mit solchen Formteilen bestehende Verletzungsgefahr erheblich verringert.

K.Friedrich-1

Die Erfindung wird anhand von Zeichnungen wie folgt näher beschrieben. In den Zeichnungen zeigt:

Fig. 1    das Ausführungsbeispiel einer Streckform mit halbseitig offenen Formhälften und eingelegtem Kunststoffmaterial sowie mit halbseitig geschlossenen Formhälften, in denen das Kunststoffmaterial durch Einblasen von Heißluft umgeformt ist, in einer Querschnittsansicht;

Fig. 2    einen Ausschnitt der geschlossenen Streckform mit Formteil, vor dem Öffnen der beiden Formhälften, längsgeschnitten.

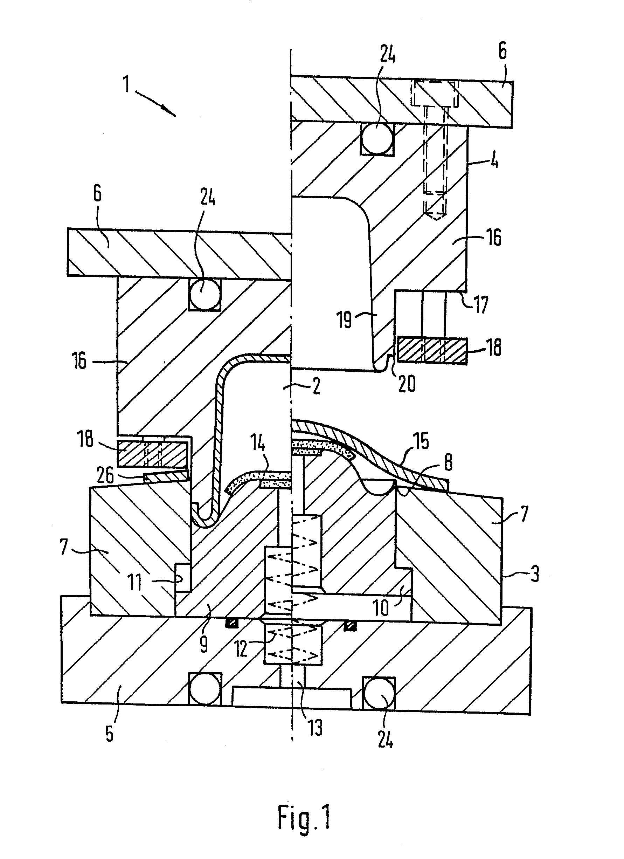

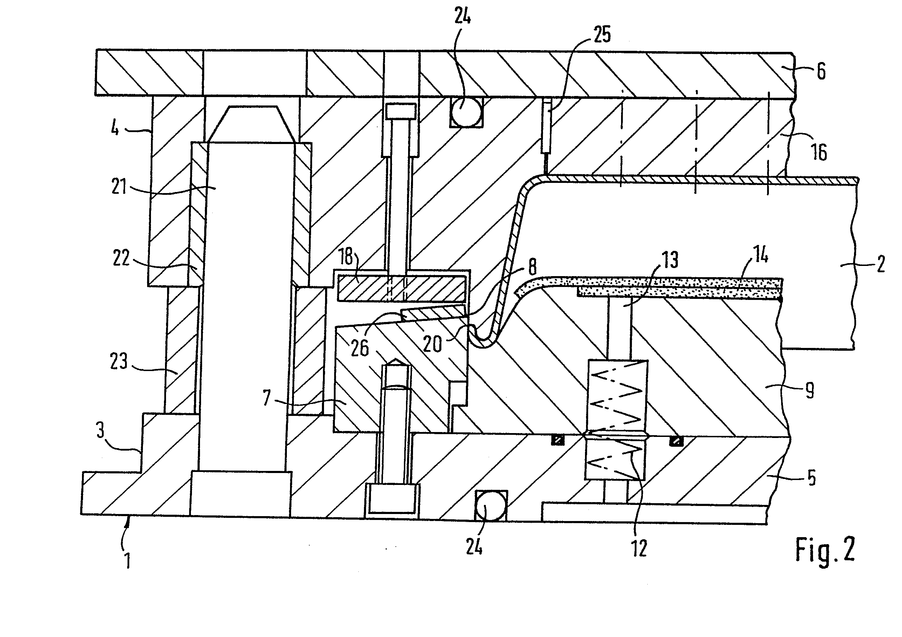

In den Fig. 1 und 2 ist die Steckform insgesamt mit 1 bezeichnet. Sie dient zur Fertigung von Formteilen 2, welche aus thermoplastischem Kunststoff hergestellt werden. Die als kombiniertes Blas- und Schneidewerkzeug ausgebildete Streckform 1 besteht im wesentlichen aus zwei verschiedenen Formhälften 3, 4, deren Einzelteile zweckmäßigerweise jeweils auf einer Grundplatte 5, 6 montiert sind.

An der Grundplatte einer ersten Formhälfte 3 ist eine Schnittleiste 7 befestigt. Diese ist dem Umriß des Formteiles 2 entsprechend angeordnet, wobei ihre Innenkante als Schneidkante 8 ausgebildet ist. Bei dem vorliegenden Ausführungsbeispiel der Streckform 1 ist das darin hergestellte Formteil 2 eine mit Krallrand versehene Wanne, die zur Abdeckung von Langfeldleuchten dient. Die Schnittleiste 7 nimmt daher auf der Grundplatte 5 eine rahmenförmige Anordnung ein. Der Leistenrahmen kann aus einem Stück bestehen oder auch aus mehreren Einzelteilen zusammengesetzt sein. Innerhalb der Schnittleiste 7 ist ein in Richtung der anderen Formhälfte 4 verschieblich gelagerter Federboden 9 angeordnet, welcher vorteilhafterweise zu-

K.Friedrich-1

gleich als Vorschleppstempel ausgebildet ist. Der Federboden 9 ist wenigstens an zwei sich gegenüber liegenden Seiten mit leistenartigen Vorsprüngen 10 versehen, die in entsprechenden Ausnehmungen 11 der Schnittleiste 7 geführt sind. Mittels eines oder mehrer, vorzugsweise als zylindrische Druckfedern ausgebildeter Federelemente 12, wird der Federboden 9 in vorgespannter Lage gehalten. Die Federelemente 12 sitzen in entsprechenden Erweiterungen von die Grundplatte 5 und den Federboden 9 durchdringenden Bohrungen 13, welche der Zuleitung von Blasluft dienen. Die Oberfläche des Federbodens 9 ist weitgehend mit einer Filzauflage 14 bedeckt, die einerseits für eine Verteilung der Blasluftströme sorgt und andererseits die Oberfläche des Platten- bzw. Bandmaterials 15 beim Einlegen in die Streckform 1 schont.

An der Grundplatte 6 einer zweiten Formhälfte 4 ist das Formennest 16 befestigt. Dieses Werkstück weist an der zuer ersten Formhälfte 3 gerichteten Seite außen eine Ausnehmung 17 mit darin federbelastet angeordneten Niederhaltern 18 konventioneller Ausführung auf. Hierdurch erhält das Formennest 16 an seiner offenen Formseite eine Formwandung 19, die bei vorliegendem Ausführungsbeispiel so dick ausgeführt ist, daß sie der Breite des zu formenden Teilerandes entspricht. Die Außenseite der Formwandung 19 stimmt wieder mit dem Umriß des herzustellenden Formteiles 3 überein. Dieser Wandungsteil (19) der Formhälfte 4 ist mit Gleitsitz ein Stück zwischen die Schnittleiste 7 in den Innenraum der ersten Formhälfte 3 einführbar.

Das freie Ende der Formwandung 19 des Formennestes 16 wirkt bei der Herstellung des Formteilerandes (2) als Stempel. Es ist mit einer von der Außenseite eingearbeiteten, der Kontur und Materialdicke des herzustellenden Formteile-

K.Friedrich-1

randes entsprechenden Aussparung versehen. Die hierdurch entstandene Außenkante ist als Schneidkante 20 ausgebildet.

Wie Fig. 2 zeigt, sind die Formhälften 3, 4 mittels Säulenführung fluchtend aufeinander ausgerichtet. An zwei Enden der Streckform 1 ist deshalb wenigstens je eine Führungssäule 21, z.B. in der Grundplatte 5 der ersten Formhälfte 3 vorgesehen, während die komplementäre zweite Formhälfte 4 eine entsprechend angeordnete Führungsbuchse 22 enthält. Zwischen beiden Formhälften 3, 4 ist ferner noch ein Distanzstück 23 angeordnet, das die Schließbewegung der voneinander trennbaren Formhälften 3, 4 begrenzt. Um größere Temperaturdifferenzen zwischen dem außerhalb der Streckform 1 vorgewärmten Platten- oder Bandmaterial 15 und den Formhälften 3, 4 zu vermeiden, sind Heizleitungen 24 vorgesehen, die bei der ersten Formhälfte 3 z.B. in der Grundplatte 5 und bei der zweiten Formhälfte 4 zweckmäßigerweise im Formennest 16 angeordnet sind. In letzterem sind auch die erforderlichen Entlüftungsbohrungen 25 enthalten.

Zum Herstellen eines Formteiles 2 wird das Platten- oder Bandmaterial 15 mit allseitigem Überstand in die geöffnete Streckform 1 eingelegt und ihre Formhälften 3, 4 danach geschlossen. Beim Schließvorgang wird das Platten- oder Bandmaterial zuerst vom Formwandungsrand (19) der einen Formhälfte 4 und dem am Rand komplementär ausgebildeten Federboden (9) der anderen Formhälfte 3 erfaßt. In dieser noch unbetätigten Ruhestellung steht die Außenkante des Federbodens 9 etwas aus der Schnittleiste 7 hervor. Bei weiter andauernder Schließbewegung wird der Überstand des Platten- oder Bandmaterials 15 zwischen den am Formenneste 16 angeordneten Niederhaltern 18 und der Schnittleiste 7 eingeklemmt und der im Innern der Schnittleiste befindliche Federboden 9 entgegen der Wirkung seiner Federelemente 12 zurückgedrückt. Beim Eindringen des Formwandungsrandes

0089444

K.Friedrich-1

(19) in den Innenraum der Schnittleiste 7 wird der Überstand des Platten- oder Bandmaterials 15 mittels der zuvor bereits erwähnten Schneidkanten 8, 20 durchtrennt, wodurch beim weiteren Einführen der Anordnung ein abgetrennter Abfallstreifen 26 zurückbleibt. Die Schließbewegung endet, nachdem die an der Formwandung 19 des Formennestes 16 befindliche Schneidkante 20 die Schneidkante 8 der Schnittleiste 7 passiert hat, wobei die Innenseite der Schnittleiste 7 eine äußere Formbegrenzung für den Rand des zu formenden Teiles bildet. Mittels Einblasen von Heißluft durch die dafür vorgesehenen Bohrungen 13 wird das Formteil 2 hergestellt. Nach darauffolgendem Öffnen der beiden Formhälften 3, 4 gehen der Federboden 9 und alle Niederhalter 18 wieder in ihre Ursprungslage zurück und die Streckform 1 kann nach Entnehmen des fertiggestellten Formteiles 2 und Beseitigen des Abfallstreifens 26 für das Herstellen eines weiteren Formteiles verwendet werden.

- 1 -

0089444

Reiss International GmbH

Tettnang

K.Friedrich-1

Patentansprüche

1. Verfahren zur Herstellung von schalen- oder wannenartigen Formteilen (2) aus thermoplastischem Kunststoff,
bei welchem Verfahren vorgewärmtes Platten- oder Bandmaterial (15) in einer Streckform (1) durch mechanisches
und pneumatisches Umformen verarbeitet und der randseitig
überstehende Abfallstreifen (26) abgetrennt wird,  d a -
d u r c h  g e k e n n z e i c h n e t ,  daß der Abfallstreifen (26) bereits beim Schließen der Streckform (1)
durch an dieser vorgesehene Schneidkanten (8, 20) abgetrennt
wird.

2. Verfahren nach Anspruch 1, dadurch gekennzeichnet, daß
das Platten- oder Bandmaterial (15) in der Streckform (1)
vom Federboden (9) einer ersten Formhälfte (3) und dem
Rand der Formwandung (19) einer zweiten Formhälfte (4) erfaßt und diese Anordnung danach gemeinsam tiefer in den
Innenraum der ersten Formhälfte (3) geführt wird, wobei
die Schneidkante (20) der zweiten Formhälfte (4) die
Schneidkante (8) der ersten Formhälfte (3) passiert.

3. Vorrichtung zur Durchführung des Verfahrens nach Anspruch 1, dadurch gekennzeichnet, daß in eine erste Formhälfte (3) der Streckform (1) deren zweite Formhälfte (4)

ZT/P1-Ka/V

12.02.1982

- 2 -

K.Friedrich-1

einführbar ist und daß die Schneidkanten (8, 20) zum Abtrennen des Abfallstreifens (26) aus einer Innenkante der ersten Formhälfte (3) und einer Außenkante der zweiten Formhälfte (4) bestehen.

4. Vorrichtung nach Anspruch 3, dadurch gekennzeichnet, daß die Schneidkante (8) der ersten Formhälfte (3) an einer den Umriß des herzustellenden Formteiles (2) begrenzenden Schnittleiste (7) angeordnet ist.

5. Vorrichtung nach Anspruch 3, dadurch gekennzeichnet, daß die Schneidkante (20) der zweiten Formhälfte (4) aus einer dem Umriß des herzustellenden Formteiles (2) entsprechenden Außenkante der Formwandung (19) des Formennestes (16) besteht.

6. Vorrichtung nach einem der Ansprüche 3 oder 5, dadurch gekennzeichnet, daß die Formwandung (19) des Formennestes (16) an ihrer offenen Formseite so dick ausgeführt ist, wie der herzustellende Formteilrand breit ist.

7. Vorrichtung nach einem der Ansprüche 3, 5 oder 6, dadurch gekennzeichnet, daß das freie Ende der Formwandung (19) des Formennestes (16) mit einer von der Außenseite eingearbeiteten, der Kontur und Materialdicke des herzustellenden Formteilerandes entsprechenden Aussparung versehen ist.

8. Vorrichtung nach einem der Ansprüche 3 oder 4, dadurch gekennzeichnet, daß der Federboden (9) der ersten Formhälfte (3) innerhalb ihrer Schnittleiste (7) angeordnet ist und daß er eine dem Formwandungsrand des Formennestes (16) entsprechend komplementäre Ausbildung aufweist.

K.Friedrich-1

9. Vorrichtung nach einem der Ansprüche 3, 4 oder 8, dadurch gekennzeichnet, daß der innerhalb der Schnittleiste (7) angeordnete Federboden (9) als Vorschleppstempel ausgebildet ist.

10. Vorrichtung nach einem der Ansprüche 3, 4, 8 oder 9, dadurch gekennzeichnet, daß der Federboden (9) innerhalb der Schnittleiste (7) von Federelementen (12) unter Vorspannung gehalten ist, die in Erweiterungen von der Zuleitung von Blasluft dienenden Bohrungen (13) angeordnet sind.

Fig.1

Fig.2

Europäisches
Patentamt

# EUROPÄISCHER RECHERCHENBERICHT

**0089444**
Nummer der Anmeldung

EP 82 71 0013

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | B 29 C 17/04 |
| X | FR-A-1 252 037 (FARBWERKE HOECHST) * Seite 1, linke Spalte, Absatz 2; Zusammenfassung; Figuren 13-17 * | 1 | |
| | --- | | |
| X | CH-A- 334 742 (BRUPBACHER) * Insgesamt * | 1,3-5 | |
| | --- | | |
| X | US-A-3 336 424 (CHENEY) * Spalte 2, Zeile 51 - Spalte 3, Zeile 15; Figuren 1-4 * | 1,3,5-7 | |
| | --- | | |
| A | FR-A-2 139 764 (ONO) * Anspruch 1; Figuren 1-5 * | 1,3 | |
| | --- | | **RECHERCHIERTE SACHGEBIETE (Int. Cl. 3)** |
| A | NL-A- 285 442 (ETABL. INTERFLEX) * Seite 3, Zeile 32 - Seite 4, Zeile 6; Figur 1 * | 2,8-10 | B 29 C |
| | --- | | |
| A | DE-A-2 753 303 (FERNHOLZ) | | |
| | --- | | |
| A | GB-A-1 395 611 (PIONEER) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 26-11-1982 | WELSCH H.R. |